# EUROPÄISCHE PATENTANMELDUNG

(11) **EP 2 883 675 A1**
(43) Veröffentlichungstag der Anmeldung: **17.06.2015**
(21) Anmeldenummer: 14177762.3
(22) Anmeldetag: 21.07.2014
(51) Int. Cl.: B29C 45/33

(54) **Spritzgießform und Verfahren zur Herstellung eines einteiligen Pumpenlaufrades**

(30) Priorität: 08.08.2013 EP 13179766
(71) Anmelder: NKS M. Baukloh, 58540 Meinerzhagen (DE)
(72) Erfinder: Baukloh, Horst, 58540 Meinerzhagen (DE)
(74) Vertreter: Patentanwälte Dörner & Kötter PartG mbB

(57) **Zusammenfassung**

Die Erfindung betrifft eine Spritzgießform (1) zur Herstellung eines einteiligen Pumpenlaufrades (5) mit gewölbten Flügeln (51), zwischen denen Kanäle (52) gebildet sind, umfassend eine erste, auswerferseitige Formhälfte (2) und eine zweite, angussseitige Formhälfte (3), wobei an den Formhälften (2, 3) jeweils ein innerer Formkern (21, 31) angeordnet ist, und wobei konzentrisch zu dem inneren Formkern (21, 31) jeweils eine Kernscheibe (22, 32) drehbar gelagert angeordnet ist, welche jeweils Kernschieber (24, 34) aufnimmt, an denen endseitig Schaufelkernteile (25, 35) angeordnet sind, deren Außenflächen zumindest bereichsweise die Außenflächen der Flügel (51) des Pumpenlaufrades (5) abbilden, die an den Schaufelkernteilen (25, 35) anliegen, wobei die Kernschieber (24, 34) derart auf der jeweiligen Kernscheibe (2, 3) verschiebbar gelagert sind, dass die Schaufelkerne (25, 35) durch Drehung der jeweiligen Kernscheibe (22, 32) aus den Kanälen (52) des Pumpenlaufrades (5) zu dessen Entformung heraus bewegbar sind.

## Beschreibung

Die Erfindung betrifft eine Spritzgießform zur Herstellung eines einteiligen Pumpenlaufrades nach dem Patentanspruch 1. Die Erfindung betrifft weiterhin ein Verfahren zur Herstellung eines einteiligen Pumpenlaufrades mit einer solchen Spritzgießform nach dem Patentanspruch 9.

Pumpenlaufräder, insbesondere Laufräder von Zentrifugal- oder Kreiselpumpen weisen üblicherweise eine Anzahl von Flügeln auf, zwischen denen Kanäle gebildet sind, welche sich vom Zentrum des Pumpenlaufrades zum Außenumfang entlang einer gekrümmten Bahn erstrecken. Die Flügel sind dabei zwischen zwei voneinander beabstandeten Gehäuseteilen ausgebildet, sodass die Strömungskanäle als geschlossene Kanäle vom Innenumfang zum Außenumfang verlaufend ausgebildet sind.

Aufgrund der gekrümmten Ausbildung der Flügel gestaltet sich die Fertigung derartiger Pumpenlaufräder aufwendig. So ist es bekannt, Pumpenlaufräder aus mehreren Teilen zusammenzusetzen. Dabei können die Flügel von einem Gehäuseteil ausgebildet werden, wonach in einem weiteren Arbeitsgang ein zweites Gehäuseteil auf die Stirnkanten der Schaufeln aufgeschweißt wird. Es ist weiterhin bekannt, Pumpenlaufräder einstückig als Gussteil mithilfe verlorener Kerne zu fertigen, da aufgrund der gekrümmten Geometrie der Flügel ein Herausziehen der Kerne in Längsrichtung der Strömungskanäle verhindert ist. Diese vorbekannten Herstellungsverfahren erweisen sich in der Praxis als sehr aufwendig.

Hier will die Erfindung Abhilfe schaffen. Der Erfindung liegt die Aufgabe zugrunde, eine Spritzgießform zur Herstellung eines einteiligen Pumpenlaufrades bereit zu stellen, welche eine einfache und kostengünstige Herstellung eines Pumpenlaufrades ermöglicht. Gemäß der Erfindung wird diese Aufgabe durch eine Spritzgießform mit den Merkmalen des Patentanspruchs 1 gelöst.

Mit der Erfindung ist eine Spritzgießform zur Herstellung eines Pumpenlaufrades bereitgestellt, welche eine einfache und kostengünstige Herstellung eines Pumpenlaufrades ermöglicht. Durch die konzentrisch zu dem inneren Formkern einer jeden Formhälfte drehbar gelagert angeordnete Kernscheibe, welche Kernschieber aufnimmt, an denen endseitig Schaufelkernteile angeordnet sind, deren Außenflächen zumindest bereichsweise die Außenflächen der Flügel des Pumpenlaufrades abbilden, die an den Schaufelkernteilen anliegen, wobei die Kernschieber derart auf der jeweiligen Kernscheibe verschiebbar gelagert sind, dass die Schaufelkerne durch eine Drehung der jeweiligen Kernscheibe aus den Kanälen des Pumpenrades zu dessen Entformung herausbewegbar sind, ist eine Entformung des Pumpenlaufrades mit gekrümmten Geometrie seiner Flügel nunmehr ermöglicht.

In Weiterbildung der Erfindung weisen die Kernschieber jeweils einen Führungsstift auf, über den sie mit jeweils einer Kurvenbahn im Eingriff sind, über die sie bei Drehung der jeweiligen Kernscheibe entlang einer definierten Bahn bewegbar sind. Hierdurch ist ein exakt definiertes Herausbewegen der Schaufelkernteile aus den Kanälen des Pumpenlaufrades entlang der gekrümmten Geometrie der Flügel erzielt. Bevorzugt ist die Kurvenbahn dabei positionsfest außerhalb der jeweiligen drehbaren Kernscheibe angeordnet. Alternativ kann die Kurvenbahn jedoch auch in der jeweiligen drehbar angeordneten Kernscheibe selbst eingebracht sein.

In Ausgestaltung der Erfindung sind die Schaufelkernteile der Kernschieber der beiden Formhälften bei geschlossener Spritzgießform sich ergänzend übereinander positioniert zu einem Schaufelkern zusammengesetzt, der die Innenkontur eines Kanals des Pumpenlaufrades abbildet, wobei die Schaufelkernteile zur Entformung eines Pumpenlaufrades nacheinander aus dem zugordneten Kanal des Pumpenlaufrades entlang einer definierten Bahn herausbewegbar sind. Hierdurch ist ein stufenweises Herausbewegen der Schaufelkernteile aus den Kanälen ermöglicht, wobei eine Beschädigung der Flügel im Zuge der Entformung vermieden ist.

In weiterer Ausgestaltung der Erfindung weist der innere Formkern der auswerferseitigen Formhälfte umlaufend radiale Formflügel auf, die in geschlossenem Zustand der Spritzgießform endseitig jeweils an einem durch zwei Schaufelkernteile der Kernschieber gebildeten Schaufelkern anstoßen und dessen Kontur zur Bildung jeweils eines Kanals des Pumpenlaurades fortführen, wobei die Außenflächen jeweils eines Formflügels des inneren Formkerns und des an diesem anstoßenden durch die Schaufelkernteile gebildeten Schaufelkerns die Außenflächen der Flügel des Pumpenlaufrades abbilden. Hierdurch ist eine gute Entformbarkeit des Pumpenlaufrades erzielt.

In Weiterbildung der Erfindung ist der innere Formkern der auswerferseitigen Formhälfte drehbar gelagert. Hierdurch ist das Herauslösen des inneren Formkerns aus dem Pumpenlaufrad erleichtert.

In weiterer Ausgestaltung der Erfindung ist die Kernscheibe axial verschiebbar gelagert. Hierdurch ist das Herauslösen des inneren Formkerns aus dem Pumpenlaufrad weiter unterstützt.

Der vorliegenden Erfindung liegt weiterhin die Aufgabe zugrunde, ein Verfahren zur Herstellung eines Pumpenlaufrades bereitzustellen, welches eine einfache und kostengünstige Herstellung eines Pumpenlaufrades ermöglicht. Gemäß der Erfindung wird diese Aufgabe durch ein Verfahren mit den Merkmalen des Patentanspruchs 8 gelöst.

Mit der Erfindung ist ein Verfahren zur Herstellung eines Pumpenlaufrades bereitgestellt, welches eine einfache und kostengünstige Herstellung eines Pumpenlaufrades ermöglicht. Durch die Drehung der Kernscheibe der angussseitigen Formhälfte werden die Kernschieber dieser Kernscheibe radial in einer Bahn entlang der gekrümmten Flügel des Pumpenlaufrades aus dem jeweiligen Kanal heraus bewegt. Anschließend wird die angussseitige Formhälfte von der auswerferseitigen Formhälfte wegbewegt, wonach durch axiale Verschiebung der Kernscheibe und/oder des inneren Formkerns das Pumpenlaufrad von dem Formkern beabstandet wird, wodurch das Pumpenlaufrad an seiner dem inneren Formkern zugewandten Seite frei ist. Anschließend werden durch eine Drehung der Kernscheibe der auswerferseitigen Formhälfte die Kernschieber radial aus dem Pumpenlaufrad herausbewegt, ohne dass die Gefahr einer Beschädigung der gekrümmten Flügel besteht. Das Pumpenlaufrad kann so anschließend ausgeworfen werden.

In weiterer Ausgestaltung der Erfindung wird der innere Formkern axial unter gleichzeitiger Rotation aus dem Pumpenlaufrad herausbewegt. Hierdurch ist die Gefahr einer Beschädigung der gekrümmten Flügel des Pumpenlaufrades bei der Herausbewegung des inneren Formkerns weiter vermieden.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen
- Figur 1: die schematische räumliche Darstellung einer Spritzgießform (auswerferseitig);
- Figur 2: die angussseitige Darstellung der Spritzgießform aus Figur 1;
- Figur 3: die schematische Darstellung der Entformung eines Pumpenlaufrades mit einer Spritzgießform in einer weiteren Ausbildung;
- Figur 4: Spritzgießform aus Figur 3 in einer schematischen Schnittdarstellung in Seitenansicht;

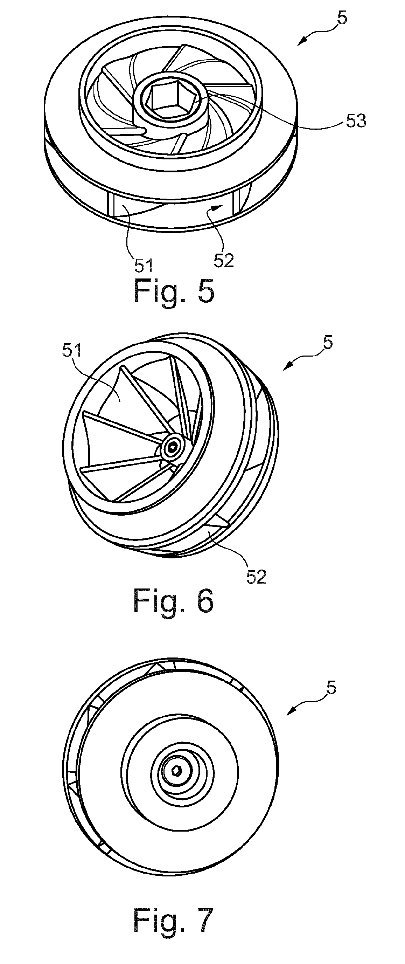

- Figur 5: die räumliche Darstellung eines einteilig hergestellten Pumpenlaufrades;
- Figur 6: die räumliche Darstellung des Pumpenlaufrades aus Figur 5 in einem anderen Winkel;
- Figur 7: das Pumpenlaufrad aus Figur 5 in der Ansicht von unten;

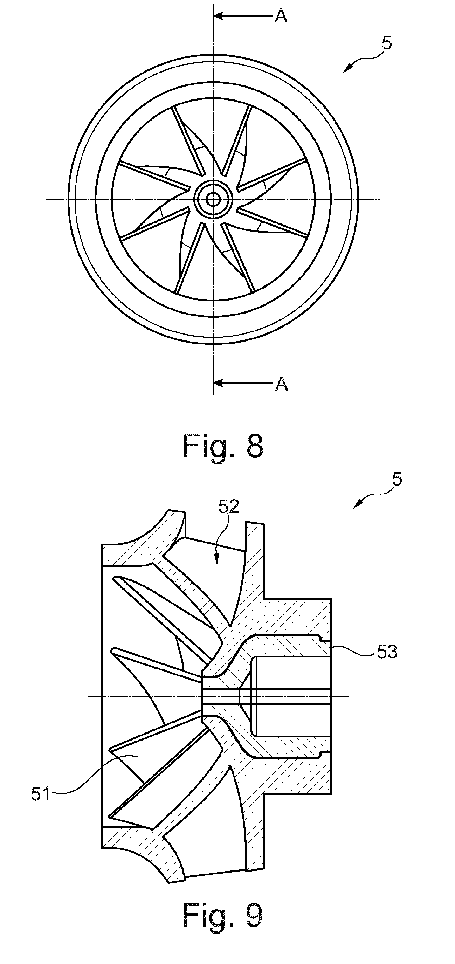

- Figur 8: das Pumpenlaufrad aus Figur 5 in der Draufsicht und
- Figur 9: die Darstellung des Pumpenlaufrades aus Figur 8 im Schnitt A-A

Die als Ausführungsbeispiel gewählte Spritzgießform 1 zur Herstellung eines einteiligen Pumpenlaufrades besteht im Wesentlichen aus einer auswerferseitigen Formhälfte 2 sowie einer angussseitigen Formhälfte 3, an denen jeweils ein innerer Formkern 21, 31 angeordnet ist. Konzentrisch zu dem inneren Formkern 21, 31 ist jeweils eine Kernscheibe 22, 32 drehbar gelagert angeordnet, welche jeweils Kernschieber 24, 34 aufnimmt, an denen endseitig Schaufelkernteile 25, 35 angeordnet sind.

Die Kernscheiben 22, 32 sind in Form einer kreisrunden Scheibe ausgebildet, in die umlaufend nutförmige Führungsschienen 23, 33 zur Aufnahme von Kernschiebern 24, 34 eingebracht sind. Die nutartigen Führungsschienen 23, 33 sowie die mit diesen korrespondierenden Kernschieber 24, 34 sind bogenförmig ausgeführt, wodurch eine bogenförmige Bewegung des jeweiligen Kernschiebers 24, 34 zur Herausbewegung der an diesem endseitig angeordneten Schaufelkernteile 25, 35 entlang der gewölbten Flächen der Flügel 51 des Pumpenlaufrades 5 erzielt ist. Die Schaufelkernteile 25, 35 sind einteilig an den Kernschiebern 24, 34 angeformt.

Die Kernscheiben 22, 32 sind jeweils auf einer Trägerplatte 20, 30 drehbar gelagert, welche mit der zugehörigen Formhälfte 2, 3 verbunden sind. Auf der Trägerplatte 20, 30 sind etwa tangential zur Kernscheibe 22, 32 Führungsblöcke 4 angeordnet, welche jeweils mit einer nutförmigen Kurvenbahn 41 versehen sind, in die jeweils ein endseitig eines Kernschiebers 24, 34 angeordneter Führungsstift 26, 36 eingreift. Endseitig der Kurvenbahn 41 ist an jedem Führungsblock 4 ein Gegenblock 42 angeordnet. Der Gegenblock 42 ist derart ausgebildet, dass das dem Pumpenlaufrad 5 gegenüberliegende Ende des Kernschiebers 24, 34 im Grundzustand vor der Entformung des Pumpenlaufrades 5 an diesem anliegt, sodass der jeweilige Kernschieber 24, 34 mit seinem endseitig angeordneten Schaufelkernteil 25, 35 gegen den Einspritzdruck der plastifizierten Kunststoffmasse in die Spritzgießform 1 abgestützt ist. Die Kurvenbahn 41 des Führungsblocks 4 ist derart ausgebildet, dass bei Drehung der Kernscheibe 22, 32 der jeweilige Kernschieber 24, 34 mit seinem Schaufelkernteil 25, 35 entlang der jeweiligen Flügel 51 des Pumpenlaufrades 5 aus dem zugeordneten Kanal 52 herausgeführt wird.

Die Schaufelkernteile 25, 35 der Kernschieber 24, 34 sind derart ausgebildet, dass bei geschlossener Spritzgießform 1 jeweils zwei übereinander angeordnete Kernschieber 24, 34 mit ihren Schaufelkernteilen 25, 35 einen Schaufelkern ausbilden, der die Innenkontur eines Kanals 52 des Pumpenlaufrades 5 abbildet.

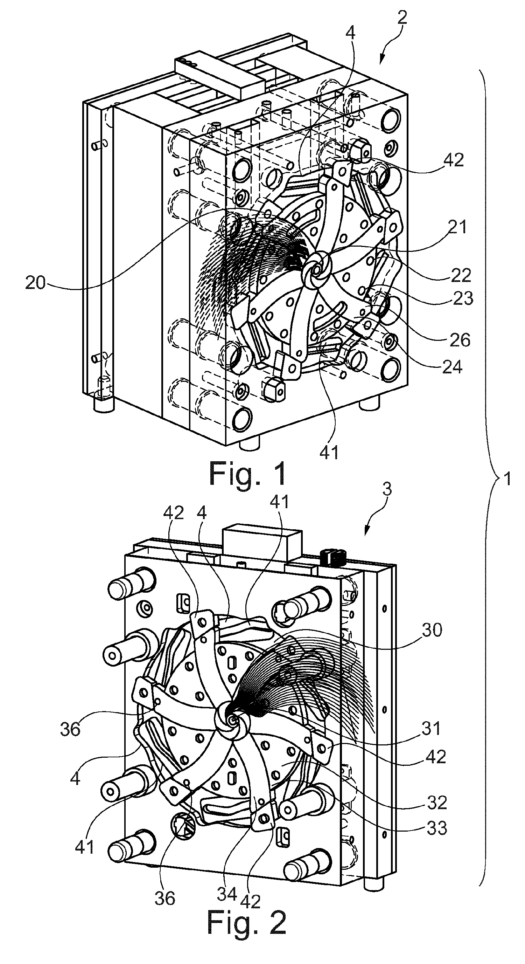

Die Bewegungen der Kernschieber 24, 34 der Formhälften 2, 3 während des Entformungsvorgangs sind in den Figuren 1 und 2 mit schematischen Bewegungslinien dargestellt. Dabei sind die jeweiligen Positionen der Führungsstifte 26, 36 in der jeweiligen Kurvenbahn 41 des Führungsblocks 4 angedeutet. Nach Erstarren der in die geschlossene Spritzgießform eingespritzten plastifizierten Kunststoffmasse des hergestellten Pumpenlaufrades 5 folgt eine Drehung der Kernscheibe 32 der angussseitigen Formhälfte 3, wodurch die Kernschieber 34 mit den an diesen angeformten Schaufelkernteilen 35 über den an diesen angeordneten Führungsstift 36 über die Kurvenbahn 41 des Führungsblocks 4 innerhalb der Führungsschiene 33 der Kernscheibe 32 aus dem jeweiligen Kanal 52 des Pumpenlaufrades 5 herausbewegt wird. Hierdurch wird hinter den Schaufelkernteilen 25 der Kernschieber 24 der auswerferseitigen Formhälfte 2 ein Freiraum geschaffen. Nachfolgend wird die angussseitige Formhälfte 3 von der auswerferseitigen Formhälfte 2 axial wegbewegt und die Trägerplatte 20 mit der auf dieser angeordneten Kernscheibe 22 wird über Pneumatikzylinder nach vorne bewegt, wodurch die Schaufelkernteile 25 der Kernschieber 24 aus dem Hinterschnittbereich der Kanäle 52 des Pumpenlaufrades 5 herausbewegt werden, wodurch diese nunmehr frei sind. Anschließend erfolgt eine Drehung der Kernscheibe 22 der auswerferseitigen Formhälfte, wodurch die die mit den Kernschiebern 24 verbundenen Schaufelkernteile 25 aus dem jeweils zugeordneten Kanal 52 herausbewegt werden. Nachfolgend kann das Pumpenlaufrad 5 ausgeworfen werden.

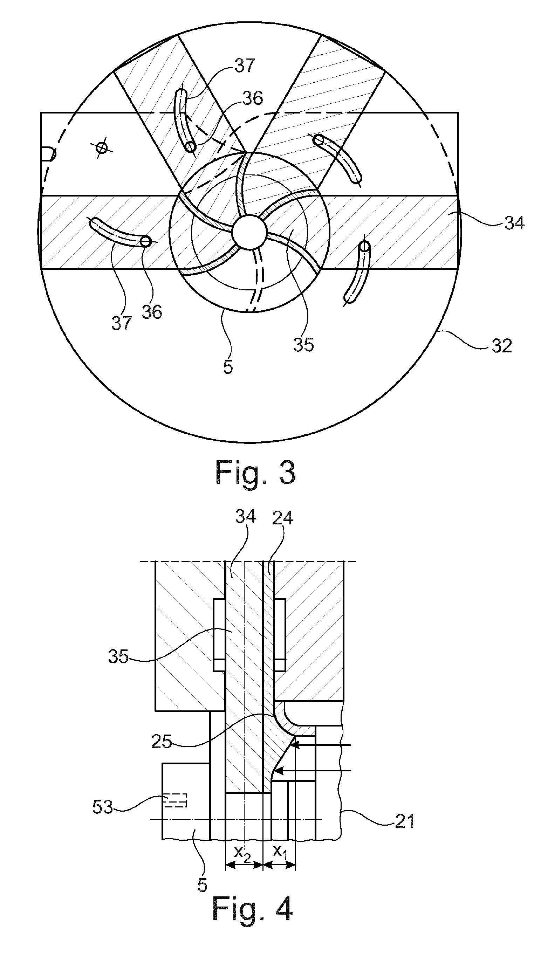

Im Ausführungsbeispiel gemäß Figur 3 sind die Kurvenbahnen 37 in der Kernscheibe 32 angeordnet, wobei die jeweils an den Kernschiebern 34 angeordneten Führungsstifte 36 in die Kurvenbahnen 37 eingreifen. Eine Drehung der Kernscheibe 32 entgegen dem Uhrzeigersinn bewirkt eine Drehung der Kernschieber 34 im Uhrzeigersinn, welche über die Kurvenbahnen 37 derart geführt werden, dass die Schaufelkernteile 35 der Kernschieber 34 entlang der gewölbten Flügel 51 des Pumpenlaufrades 5 aus dem jeweiligen Kanal 52 herausgeführt werden.

## Patentansprüche

1. Spritzgießform (1) zur Herstellung eines einteiligen Pumpenlaufrades (5) mit gewölbten Flügeln (51), zwischen denen Kanäle (52) gebildet sind, umfassend eine erste, auswerferseitige Formhälfte (2) und eine zweite, angussseitige Formhälfte (3), wobei an den Formhälften (2, 3) jeweils ein innerer Formkern (21, 31) angeordnet ist, und wobei konzentrisch zu dem inneren Formkern (21, 31) jeweils eine Kernscheibe (22, 32) drehbar gelagert angeordnet ist, welche jeweils Kernschieber (24, 34) aufnimmt, an denen endseitig Schaufelkernteile (25, 35) angeordnet sind, deren Außenflächen zumindest bereichsweise die Außenflächen der Flügel (51) des Pumpenlaufrades (5) abbilden, die an den Schaufelkernteilen (25, 35) anliegen, wobei die Kernschieber (24, 34) derart auf der jeweiligen Kernscheibe (2, 3) verschiebbar gelagert sind, dass die Schaufelkernteile (25, 35) durch Drehung der jeweiligen Kernscheibe (22, 32) aus den Kanälen (52) des Pumpenlaufrades (5) zu dessen Entformung heraus bewegbar sind.

2. Spritzgießform nach Anspruch 1, **dadurch gekennzeichnet, dass** die Kernschieber (24, 34) jeweils einen Führungsstift (26, 36) aufweisen, über den sie mit jeweils einer Kurvenbahn (37, 41) im Eingriff sind, über die sie bei Drehung der jeweiligen Kernscheibe (22, 32) entlang einer definierten Bahn bewegbar sind.

3. Spritzgießform nach Anspruch 2, **dadurch gekennzeichnet, dass** bei wenigstens einer Formhälfte (2, 3) die jeweilige Kurvenbahn (37) in der drehbar angeordneten Kernscheibe (22, 32) eingebracht ist.

4. Spritzgießform nach Anspruch 2 oder 3, **dadurch gekennzeichnet, dass** bei wenigstens einer Formhälfte (2, 3) die jeweilige Kurvenbahn (41) positionsfest außerhalb der Kernscheibe (22, 32) angeordnet ist.

5. Spritzgießform nach einem der vorgenannten Ansprüche, **dadurch gekennzeichnet, dass** die Schaufelkernteile (25, 35) der Kernschieber (24, 34) der beiden Formhälften (2, 3) bei geschlossener Spritzgießform (1) sich ergänzend übereinander positioniert zu einem Schaufelkern ergänzen, der die Innenkontur eines Kanals (51) des Pumpenlaufrades (5) abbildet, wobei die Schaufelkernteile (25, 35) zur Entformung eines Pumpenlaufrades (5) nacheinander aus dem zugeordneten Kanal (52) des Pumpenlaufrades (5) entlang einer definierten Bahn herausbewegbar sind.

6. Spritzgießform nach einem der vorgenannten Ansprüche, **dadurch gekennzeichnet, dass** der innere Formkern (21) der auswerferseitigen Formhälfte (2) umlaufend radiale Formflügel aufweist, die in geschlossenem Zustand der Spritzgießform (1) endseitig jeweils an einem durch zwei Schaufelkernteile (25, 35) der Kernschieber (24, 34) gebildeten Schaufelkern anstoßen und dessen Kontur zur Bildung jeweils eines Kanals (52) des Pumpenlaufrades (5) fortführen, wobei die Außenflächen jeweils eines Formflügels des inneren Formkerns (21) und des an diesem anstoßenden durch die Schaufelkernteile (25, 35) gebildeten Schaufelkerns die Außenflächen der Flügel (51) des Pumpenlaufrades (5) abbilden.

7. Spritzgießform nach Anspruch 6, **dadurch gekennzeichnet, dass** der innere Formkern (21) drehbar gelagert ist.

8. Spritzgießform nach einem der vorgenannten Ansprüche, **dadurch gekennzeichnet, dass** die Kernscheibe (22) der auswerferseitigen Formhälfte (2) axial verschiebbar gelagert ist.

9. Verfahren zur Herstellung eines einteiligen Pumpenlaufrades mit einer Spritzgießform nach einem der vorgenannten Ansprüche, **dadurch gekennzeichnet, dass** zunächst in die geschlossene Spritzgießform (1) plastifizierte Kunststoffmasse eingespritzt wird, wodurch das Pumpenlaufrad (5) hergestellt wird, und nach Verfestigung der Kunststoffmasse das Pumpenlaufrad (5) entformt wird, wobei durch eine Drehung der Kernscheibe (32) der angussseitigen Formhälfte (3) die Kernschieber (34) dieser Kernscheibe (32) zunächst radial in einer definierten Bahn aus dem Kanal (52) des Pumpenlaufrades (5) herausbewegt werden, anschließend die angussseitige Formhälfte (3) von der auswerferseitigen Formhälfte (2) wegbewegt wird, nachfolgend durch axiale Verschiebung der Kernscheibe (22) und/oder des inneren Formkerns (21) der auswerferseitigen Formhälfte (2) das Pumpenlaufrad (5) von dem inneren Formkern (21) beabstandet wird, anschließend durch eine Drehung der Kernscheibe (22) der auswerferseitigen Formhälfte (2) die Kernschieber (24) radial aus dem Pumpenlaufrad (5) herausbewegt werden und nachfolgend das Pumpenlaufrad (5) ausgeworfen wird.

10. Verfahren nach Anspruch 9, **dadurch gekennzeichnet, dass** der innere Formkern (21) unter gleichzeitiger Rotation aus dem Pumpenlaufrad (5) herausbewegt wird.

11. Verfahren nach Anspruch 9 oder 10, **dadurch gekennzeichnet, dass** in die Spritzgießform (1) vor Einspritzen der Kunststoffmasse eine Metallbuchse (53) eingelegt wird, die im nachfolgenden Spritzgießprozess umspritzt wird.
